# EUROPEAN PATENT APPLICATION

(11) **EP 1 088 477 A2**
(43) Date of publication of application: **04.04.2001**
(21) Application number: 01200139.2
(22) Date of filing: 04.06.1997
(51) Int. Cl.: A01D 78/10

(54) **Agricultural machine and method of folding up two frame beams of an agricultural machine**

(30) Priority: 07.06.1996 NL 1003292
(62) Divisional of application: 97924388.8
(71) Applicant: MAASLAND N.V., 3155 PD Maasland (NL)
(72) Inventor: Staal, Nanno Geert, 3155 NH Maasland (NL); Koorn, Maarten, 3123 CP Schiedam (NL); van den Engel, Alfonsus Jacobus, 3137 KC Vlaardingen (NL)
(74) Representative: Corten, Maurice Jean F.M.

(57) **Abstract**

An agricultural machine including a frame capable of being coupled to a tractor, which frame comprises hinge means, adjusting means and one or more frame beams which are pivotable about a relevant first pivot shaft, of which frame beams at least one is carrying at least one working member, characterized in that a relevant frame beam is pivotable about a second pivot shaft extending substantially parallel to the first pivot shaft and at some distance therefrom, and that the adjusting means comprise an adjusting element bridging the first and second pivot shafts, by means of which adjusting element , upon energizing, a pivotal movement about both pivot shafts takes place.

## Description

The invention relates to an agricultural machine including a frame capable of being coupled to a tractor, which frame comprises hinge means, adjusting means and one or more frame beams which are pivotable about a relevant first pivot shaft, of which frame beams at least one is carrying at least one working member.

Such a machine is known. Near the various hinge connections between the frame beams, the drive shafts of the known machine may comprise so-called wide-angle universal joints which enable, upon pivoting of the working members as a result of unevennesses of the ground, the drive to be preserved, but which are switched off when the working members are pivoted into the transport position.

It is an object of the invention to provide an alternative for the wide-angle universal joints.

According to the invention this is achieved in that a relevant frame beam is pivotable about a second pivot shaft extending substantially parallel to the first pivot shaft and at some distance therefrom, and in that the adjusting means comprise an adjusting element bridging the first and second pivot shafts, by means of which adjusting element, upon energizing, a pivotal movement about both pivot shafts takes place. In such a construction, notwithstanding folded up position of the frame beam, the drive of all working members is guaranteed. By means of the adjusting element, preferably constituted by a hydraulic piston/cylinder combination, the upward pivotal movement of the intermediate arm relative to the frame arm and the upward pivotal movement of the frame arm relative to the intermediate arm are controlled.

The invention further relates to an agricultural machine including a frame capable of being coupled to a tractor, which frame comprises hinge means and one or more frame beams which are pivotable about a relevant first pivot shaft, of which frame beams at least one is carrying at least one working member, characterized in that a relevant frame beam is pivotable about a second pivot shaft extending substantially parallel to the first pivot shaft and at some distance therefrom, the part connecting the two pivot shafts with each other being free from working members of the type intended for the relevant agricultural machine, in particular being entirely free from working members.

The invention further relates to an agricultural machine including a frame capable of being coupled to a tractor, which frame comprises hinge means and two frame beams of which at least one is carrying at least one working member, of which one is capable of being folded up on the second one by pivoting about a pivot shaft located between these two frame beams, characterized in that between said two frame beams, at some distance from the aforementioned pivot shaft, there is provided a further pivot shaft about which the first frame beam is pivotable as well for the purpose of being folded up on the second frame beam.

The invention further relates to a method of folding up two frame beams of an agricultural machine, of which frame beams at least one is carrying at least one or more working members, one frame beam being pivoted about two pivot shafts, extending at least substantially parallel to each other and located at some distance from each other, for the purpose of being turned with one longitudinal side towards a longitudinal side of the other frame beam.

The invention will be explained in further detail on the basis of two embodiments.
Figure 1 is a schematic plan view of a first embodiment of the agricultural machine in accordance with the invention;
Figure 2 shows a rear view of the machine;
Figure 3 shows a side view according to the arrow III in Figure 1;
Figure 4 is a side view in which a supporting part of the machine is shown in detail;
Figure 5 represents, in a schematic plan view, the operative position of an alternative embodiment of the machine according to the invention;
Figure 6 is a view taken on the line VI-VI in Figure 5;
Figure 7 is a side view of the machine according to the line VII-VII in Figure 6;
Figure 8 is a view taken on the line VIII-VIII in Figure 6;
Figure 9 represents, in a schematic plan view, the transport position of the machine according to the alternative embodiment, and
Figure 10 is a view according to the arrow X in Figure 9.

The agricultural machine in accordance with the invention includes a frame 1 consisting of a frame beam 2 extending in the direction of travel A of the machine, which frame beam 2 is adjoined by a frame beam 3 extending transversely to the direction of travel. The frame beam 3 comprises a gearbox 4 including two sidepieces 5 and 6.

To the frame beam 3 there is fastened a trestle 7. The trestle 7 is provided with legs 8 and 9 extending obliquely downwards such that, seen from behind, the trestle has the form of an inverted V. Together with the frame beam 3, the trestle 7 is coupled to the frame beam 2 by means of a hinge pin 10 extending at least substantially horizontally transversely to the direction of travel.

The upper side of the trestle 7 is coupled to a hinge point 12 on the frame beam 2 by means of an adjusting element 11, in this case constituted by a hydraulic adjusting cylinder, by means of which the trestle 7 is capable of pivoting about the hinge pin 10.

At the rear side of the machine there is located a rearward and central group 22 of four working members 14 which, in practice, are also designated as raking members or rotors. These working members are rotatable about upwardly orientated rotation shafts and are located on a line transversely to the direction of travel A. For the purpose of carrying the working members 14, the central group 22 includes a frame beam 15 on which there are disposed two working members 14, while the outer working members 14 are disposed on frame portions 16 and 17 capable of pivoting about shafts 18, 19 extending in the direction of travel A. To that end the group of working members 14 comprises a horizontal hydraulic cylinder 20 engaging arms 21 of the frame portions 16 and 17.

The frame beam 15 comprises a gearbox 23 which is coupled with the outgoing shaft of the gearbox 4 by means of an intermediate shaft 24. On the frame beam 15 of the central group 22 there is provided a trestle 25. Said trestle 25 is coupled with the trestle 7 by means of pivot arms 26. Between the trestle 7 and the trestle 25 there is disposed a hydraulic cylinder 27 by means of which the trestle 25 can be adjusted in height relative to the trestle 7; this upward movement is partly due to the fact that pivot arms 26, i.e. one centrally located upper pivot arm and two lower pivot arms 26 each positioned at the side thereof, located between the trestle 7 and the trestle 25, form, in side view, a pivotable parallelogram. The drive of the working members 14 takes place in a manner known per se by means of a drive shaft which is located in the frame beam 15 and the frame portions 16 and 17 and which extends towards the gearboxes having a square transmission of all the working members 14.

The outer groups of working members 28 each consist of four working members 29 and 30, subdivided into pairs of inner working members 29 and pairs of outer working members 30 and corresponding to the working members 14 of the central group 22. The inner working members 29 are carried by a common frame beam portion 31 and the outer working members 30 are carried by a frame beam portion 32. Both frame beam portions are coupled with each other in a hinged manner by means of an intermediate beam portion 33. The frame beam portion 31 is coupled in a hinged manner with the frame beam 3 via a hinge connection 34. Said hinge connection 34 comprises a vertical hinge and a horizontal hinge. The frame beams 31 and 32 are engaged by a hydraulic cylinder 35, by means of which the frame beam 32 can be pivoted relative to the frame beam 31 in such a manner that it is possible for the frame beam 32 to be located approximately parallel to and above the frame beam 31. Moreover, the frame beam 31 is coupled with the frame beam 2 by means of adjustable drawbars 36 and via the central adjusting element 13. By energizing the hydraulic cylinder 13, it will be possible to pivot the frame beam 31 and consequently the group of rake wheels 29, 30 so that, by pivoting about the vertical shaft of the hinge 34, they will be positioned at least approximately parallel to the direction of travel beside the frame beam 2. This applies both for the left and the right group of working members 28.

In the operative position, the groups of working members 28 are arranged in such a manner that the working members 30, which are located closest to the frame beam 2, are overlapping the outer working members 14 of the central group 22 in the direction of travel, which overlap approximately corresponds to that of the working members within each of the groups 22 and 28. Seen in the direction of travel, either the tangent plane at the orbit of the tines of the outermost rake member is located closer to the frame beam 2 than the tangent plane at the orbit of the tines of the outermost rake member of the central group 22, or the respective tangent planes coincide.

Under the frame beam 3 there are located wheels 37 arranged in the direction of travel A at a mutual distance transversely to the direction of travel A, which wheels are capable of being adjusted in height by means of a hydraulic cylinder 38. The running wheels 37 are supported by arms 40 on which the running wheels are disposed so as to be freely rotatable about horizontal rotation shafts 41. The arms 40 are mounted on carriers 43 of the frame beam 3 so as to be freely pivotable about horizontal shafts 42.

At the rear side each of the arms 40 is pivotably coupled to a hydraulic cylinder 38 which is coupled at its upper side to the frame beam 3 in a hinged manner. At the height of the rotation shaft 41, each of the running wheels 37 is supported by a spring 45. For that purpose there are disposed journals against the frame portion 2 and on the arms 40, which journals centre the spring 45. During operation, the running wheels are capable of resiliently supporting the machine, to which end the hydraulic cylinder 38 is capable of being adjusted into an unloaded position. However, by means of the hydraulic cylinder 38, the machine can be lifted relative to the wheels 37 for the purpose of adjusting the machine into the transport position.

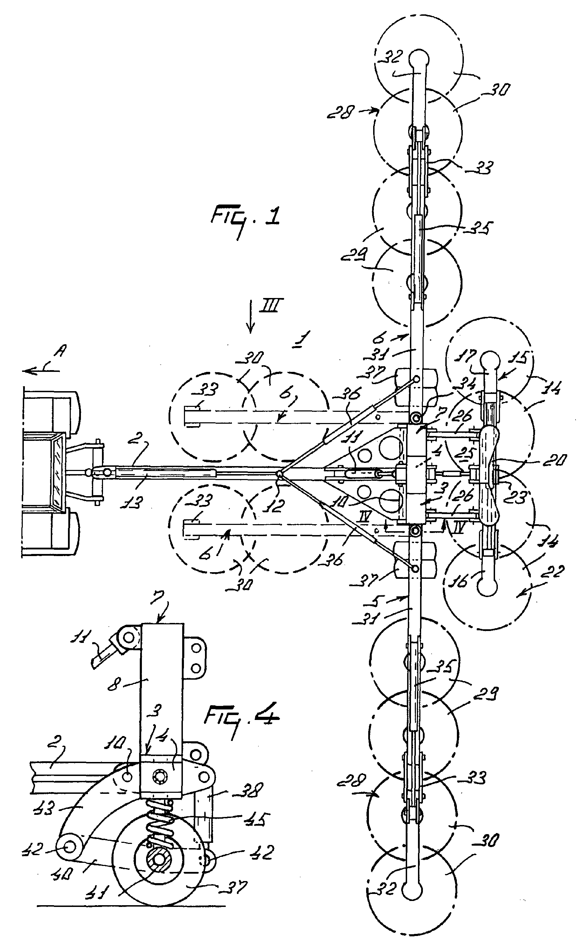

Under the working members 14, 29 and 30 there are located self-adjusting running wheels 39. The drive of the working members 14, 29, 30 extends in a manner known per se via drive shafts which extend through the frame beams on which the relevant working members are disposed. Above each working member there is located, in a manner known per se, a gearbox having a square transmission, by means of which the relevant working member 14, 29, 30 can be set rotating in such a manner that the working members are rotating in opposite. directions and the outer working members of the groups of working members are rotating, at their front sides, towards the middle of the relevant group, as indicated by the arrows III in Figure 1. Centrally on the frame portion 2 there is provided a central gearbox 4 which is capable of being coupled via intermediate shafts to the power take-off shaft of a tractor and which comprises one or more square transmissions, i.e. outgoing journals, for the drive of the groups 22 and 28.

Near the various hinge connections between the frame beams, the drive shafts, which are not further detailed in the drawing, comprise so-called wide-angle universal joints known per se which enable, upon pivoting of the working members as a result of unevennesses of the ground, the drive to be preserved, but which are switched off when the working members are pivoted into the transport position.

The hydraulic cylinders of the machine are adapted to be operated in a manner known per se from the tractor that is drawing the machine.

The function of the implement will be explained in what follows:

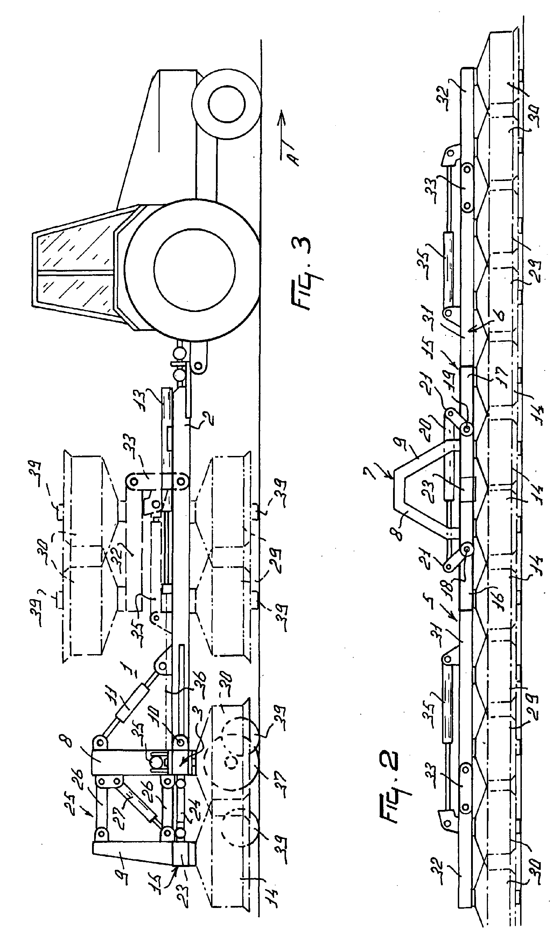

During operation the machine functions as a tedder and has in the present embodiment a working width of approximately 12.5 metres. By means of the running wheels 39 under the working members 14, 29, 30, the working members follow the unevennesses of the ground, while they are capable of pivoting about the various pivot shafts between the frame portions. When the machine has to be adjusted into a transport position, first the wheels 37 are adjusted in height in such a manner that the frame 1 will be positioned higher from the ground and, when the hydraulic cylinders 20 and 35 of the working member groups 22 and 28 have been locked, the working members of all groups are lifted from the ground as well. In view of the forwardly tilted position of the working members 14, 29, 30 during operation, it may be desirable to pivot the trestle 7 somewhat rearwards. Subsequently the outer working members of the group of working members 14 located in the middle are pivoted upwards so that said working members are located within the largest size of the inner working members of this group. Afterwards the outer working members 30 are pivoted in such a manner that they are located above the working members 29 (Figure 3), whereafter the outer groups of working members 28 are pivoted forwardly so that they are located beside the frame beam 2. In this manner the machine obtains a transport width of less than 3 metres and is moved forward during transport on the wheels 37. The present machine has inter alia the advantage that, by disposing the working members 29 and 30 in pairs on a frame beam portion 31, 32, there can be obtained a transport position in a relatively simple and advantageous manner, while the mutual cooperation of the pairs of working members 29 and 30 is preserved, while, partly due to the intermediate frame portions 33, there is maintained a proper adaptation to the ground.

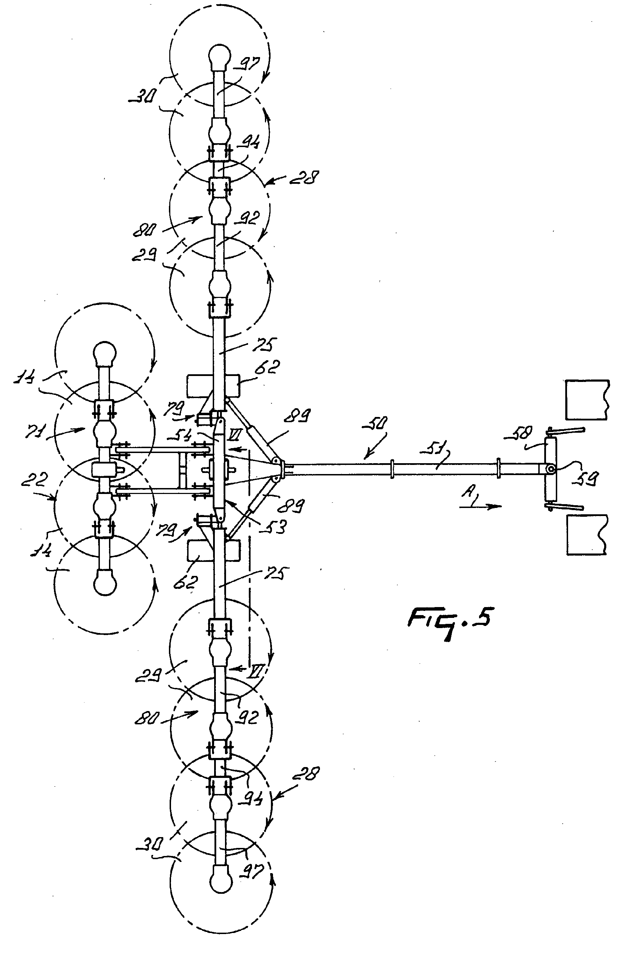

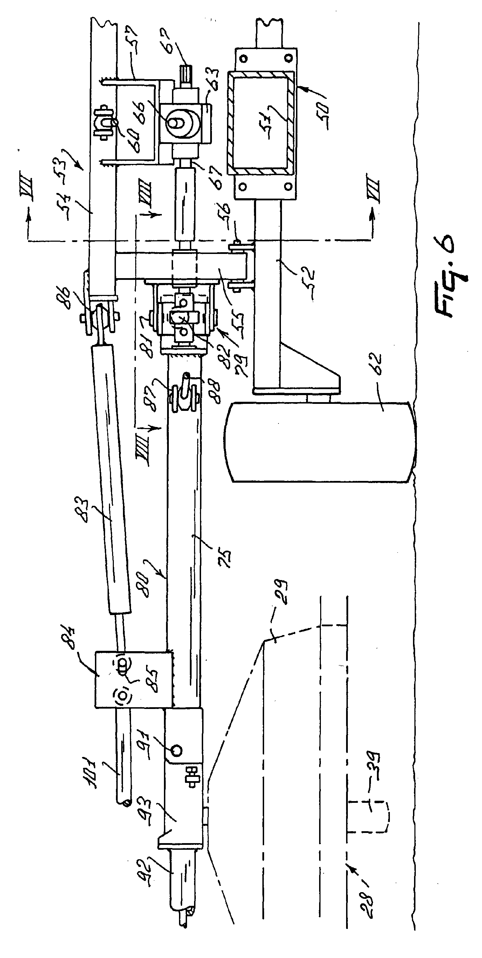

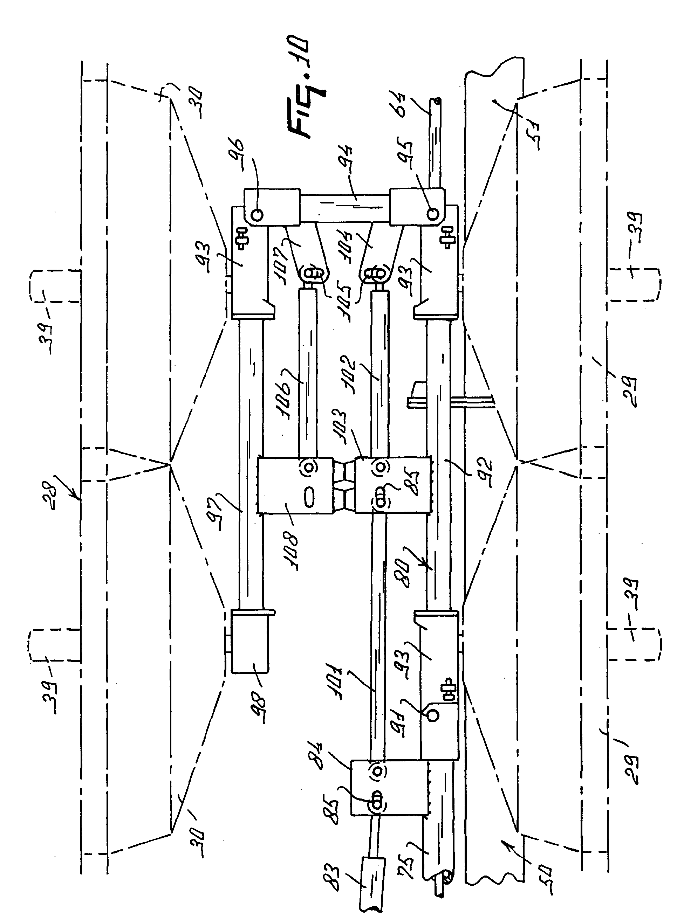

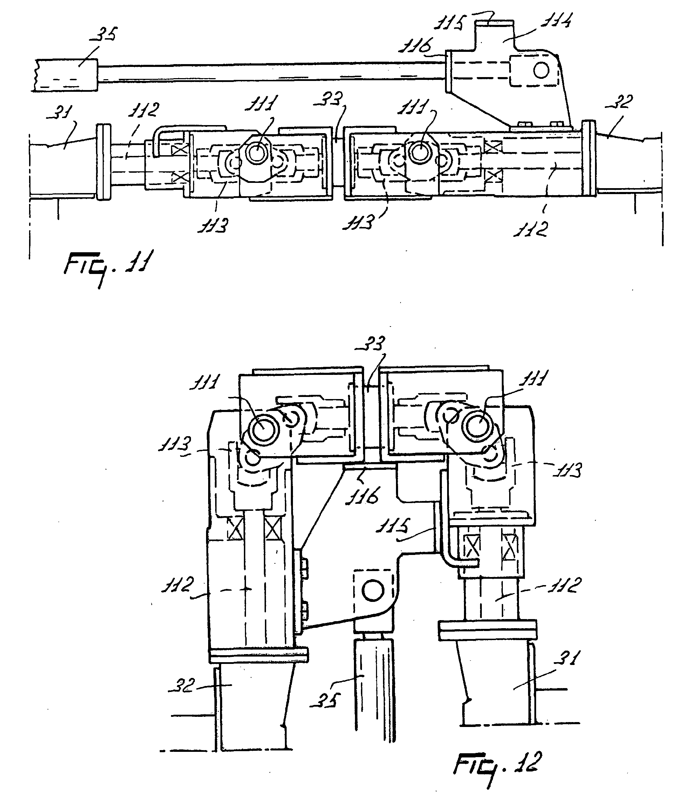

Figures 5 to 10 show an other embodiment of the invention. Parts of the hay-making machine in this embodiment corresponding to those of Figures 1 to 4 are indicated by the same reference numerals.

The machine includes a frame 50 provided with a frame beam 51 extending in the direction of travel of the machine, which frame beam is fastened to a frame beam 52 extending transversely to the direction of travel. On the frame beam 52 there is mounted a trestle 53. Said trestle 53 consists of a crossbeam 54 and two beams 55 extending upwardly which are disposed on the beam 52 about horizontal cross-shafts 56. At its front side the frame beam 51 is provided with a coupling element 57 which is extending in an obliquely downward direction. For the purpose of coupling the machine to a tractor, a coupling beam 58 is fastened to said coupling element 57 so as to be capable of hinging freely about a vertical shaft 59. The coupling beam 58 is provided with a coupling element, in the present embodiment constituted by journals disposed at the ends of the beam 58, by means of which journals the machine can be coupled to the lower arms of a three-point lifting hitch of the tractor.

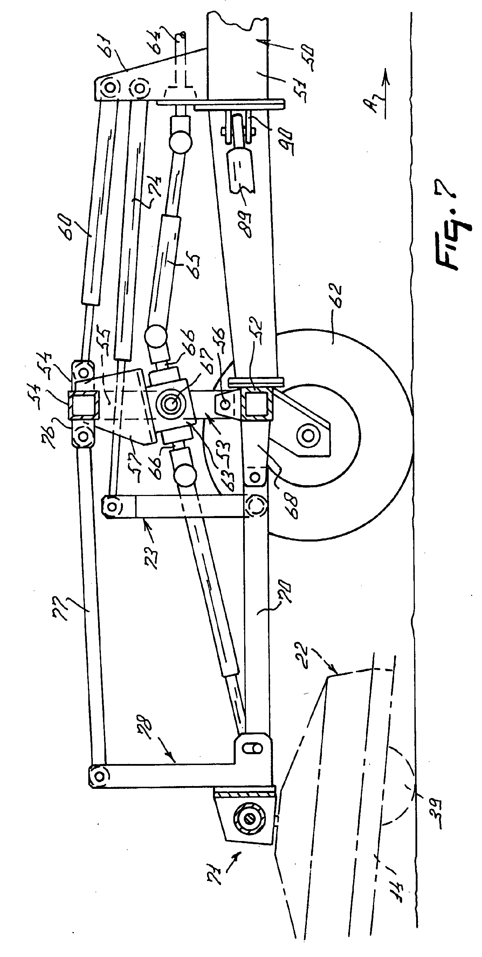

As shown in Figure 7, by means of a rod 60 which is adjustable in length, in this case constituted by a hydraulic cylinder, and via a support 61 disposed on the frame beam 51, the trestle 53 is coupled with the frame beam 51, so that the position of the trestle 53 relative to the frame beam 51 can be adjusted by a pivotal movement about the shafts 56. Although not shown in the figure, an adjusting rod 60 designed as a hydraulic cylinder comprises a stop which is adjustable relative to the cylinder portion, said stop defining the most forward position of the trestle 53 when the hydraulic cylinder has been adjusted completely. By means of this adjustable stop the forwardly tilted operative position of the working members 29, 30 is defined. For pivoting the machine into a transport position, the trestle 53, at least the shafts 81 coupled thereto, are adjusted into a vertical position.

The frame 50 is supported by two supporting wheels 62 which, in this embodiment, are immovably coupled with the frame beam 52 in the direction of travel, but which are capable of being steered, if desired, in a manner known per se, such as by means of steering swivel shafts. During operation, the supporting wheels 62 are each located at least approximately right under a frame beam 80 still to be described.

The trestle 53 is provided with a gearbox 63 disposed on the crossbeam 54, which gearbox 63 is capable of being coupled with an intermediate shaft 65 by means of an intermediate shaft 64 consisting of two parts, with the aid of which intermediate shaft 65 the gearbox 63 can be driven via the power take-off shaft of the tractor. Between the frame beam 54 and the gearbox 63 there is provided a console via which the gearbox 63 is arranged at the height of the horizontal pivot shaft 82. The gearbox is disposed in such a manner that, in the transport position, its outgoing journals 66 extending in the direction of travel are tilted upwardly in forward direction at an angle corresponding to the angle at which the working members 29, 30 are tilted forwardly.

The gearbox 63 includes a drive shaft 66 extending rearwardly and, on both sides, a drive shaft 67 extending sidewardly.

At the rear side of the frame beam 52 there are mounted connections 68, here in the form of pairs of lugs. To the connections there can be coupled a forwardly projecting arm 70 of a frame 71 of the group of working members 14 located in the middle. At the end of the arm 70 there are provided, adjacent thereto, coupling means for the coupling with the connections 68. The connections 68 extend rearwardly to such an extent that the horizontal pivot shaft, which couples a connection 68 with an arm 70, is located behind a corresponding horizontal pivot shaft in the upper connection 76. In this arrangement the arms 70 are produced as shorter ones than the arms 77. On one arm 70 or both arms 70 there is disposed, via a console, a common upper coupling point 73. Via a rod 74 capable of being adjusted in length, such as a hydraulic adjusting cylinder, said coupling point 73 can be coupled to the support 61 of the frame 50.

On the crossbeam 54 there are disposed two connections 76, here in the form of pairs of lugs, for coupling arms 77 which are connected in a hinged manner to a trestle 78 of the frame beam 15. The working members 14 are driven in a manner corresponding to that of the working members of the first embodiment and are pivoted upwardly by means of the adjusting element 74 for being brought into the transport position.

Lifting of the rearmost group 22 by adjusting the adjusting element 74, in particular for turning on the headland, has the effect that the working members 14 are brought simultaneously from a forwardly tilted position into a position in which the lower ends of the tines of a working member 14 will be located in an at least almost horizontal plane, i.e. a plane in which the rotation shafts are orientated vertically. This contributes to increasing the distance between the tines and the ground without a considerable increase of the transport height of the central group 14 and facilitates pivoting of the outer working members 14 into their transport position.

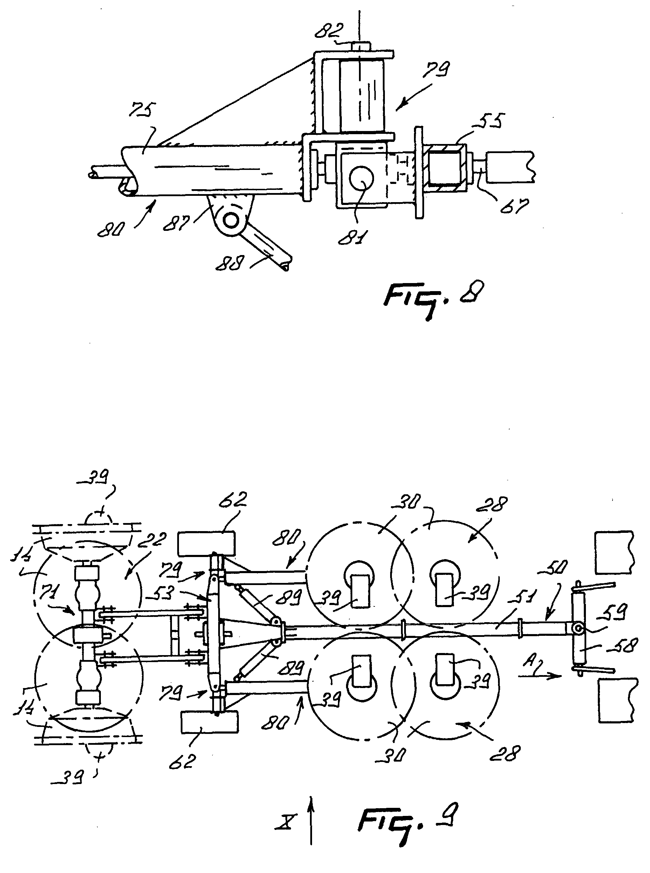

As shown more in detail in Figure 8, on the outsides of the upwardly extending beams 55, there are disposed connections 79 on which frame beams 80 are pivotably mounted about vertical shafts 81 and about horizontal shafts 82 for the groups of working members 28 located on the outside.

The horizontal shafts 82 extend in the direction of travel A, while the vertical shafts 81 intersect a line extending at least substantially perpendicularly to the direction of travel A. In accordance with the invention, both shafts may virtually be produced as interrupted ones or via a plural hinge point construction.

In the present embodiment, the shaft 81 is designed as an interrupted one constituting part of a forked element, so that the drive of the working members 29, 30 intersects the shaft 81. The drive shaft extending sidewardly, transversely to the direction of travel A, from the central gearbox 63 is passed through a loop-shaped opening in a trestle portion 53 and then extends in a straight line through the frame beam 80. Relative to the direction of travel A, the horizontal shaft 82 is disposed behind the vertical shaft 81. To that end, a frame beam 80, which is disposed in a straight line relative to the frame beam 54, is provided with a console. As a result of the fact that the gearbox 63 is coupled with the frame beam 54, the gearbox 63 pivots together with the frame beams and the working members into a forwardly tilted position. In the operative position, the shafts thereof which are orientated in the direction of travel extend substantially horizontally, which limits the wear of the universal joints known per se of the drive.

The frame beams 80 are coupled with the trestle 53 by means of hydraulic adjusting elements 83 at the height of the crossbeam 54 for automatically pivoting in height about the shaft 82. For that purpose, each of the frame beams 80 includes a projection 84 having a slot 85, in which the relevant end of the cylinder 83 is capable of moving. The hydraulic cylinders 83 are connected with the trestle 53 by means of a coupling which is moving in several directions, e.g. a ball-and-socket joint 86.

Each of the frame beams 80 furthermore comprises a fastening facility 87 to which an adjusting element, in this case the piston rod 88 of a hydraulic adjusting cylinder 89, meshes in a hinged manner. The adjusting element 89 meshes in a hinged manner to a fastening facility 90 of the frame beam 51. By means of the adjusting elements 89 the frame beams 80 are capable of pivoting forwardly in the direction of travel A relative to the central group of working members 14.

The frame beam 80 includes a frame beam 75 which is pivotable about the horizontal shaft 82, to which frame beam 75 there is fastened a pivotable frame beam 92 via the horizontal shaft 91. Via the adjusting element 83 the frame beam 75 is also connected with the trestle 53. For that purpose there is provided an upwardly extending arm or console 84 at the upper side of the frame beam 75. The console 84 is made of a piece of plate material bent into a U-shape. The edges of the free ends of the U-shape are welded against the frame beam 75. At approximately the same height, the console is provided with a slotted hole extending substantially horizontally, indicated by the reference numeral 85, and a borehole, serving in this case for fittingly including a shaft extending in the direction of travel A, by means of which shaft a rod 101 is pivotably coupled with the console 84. The shaft 91, and together therewith the end of the frame beam 75, extends transversely to the direction of travel A beyond the largest outline of the relevant outer working member 14 of the central group 22. On said frame beams 92, under two gearboxes 93 included in the relevant frame beam 92 near the ends thereof, there are disposed two working members 29 per frame beam 92. At the free ends of the frame beams 92, two intermediate arms 94 are pivotably mounted about horizontal shafts 95. At the outer end of an intermediate beam 94 a frame beam 97 is coupled about a horizontal shaft 96. In an analogous manner, working members 30 are mounted on the frame beams 97 via gearboxes 93.

The pivotal movement of the trestle 53 about the shafts 56 has the effect that the working members 14 of the group 22, together with the working members of the lateral groups 28, are brought into and out of a forwardly tilted position: the pivot shafts 56, the pivot shafts at the ends of the arm 77 and the pivot shaft at the rear ends of the arms 70 form a parallelogram construction.

The adjusting elements 74 and 83 are mutually coupled so that, in one single control operation, all three groups of working members can be adjusted into a position in which they are lifted from the ground, e.g. upon turning on the headland. For a further pivotal movement into the transport position, in accordance with the preferred embodiment, the trestle 53 has to be adjusted into a vertically orientated position, in the embodiment shown by withdrawing the adjusting element 60.

Each intermediate arm 94 is capable of being adjusted by means of a preferably hydraulically produced adjusting element 102, which is coupled in a hinged manner with the console 103 and the arm 104 of the frame beam 80 and the intermediate beam 94 respectively. The arm 104 is provided with a slot 105 which extends preferably substantially in the longitudinal direction of the intermediate beam 94.

In an analogous manner, each intermediate arm 94 is coupled with the console 108 of the intermediate arms 94 and the frame beams 97 respectively by means of a hydraulic cylinder 106 and arms 107. Under each of the working members 29, 30 there is located a running wheel 37, as also described in the previous embodiment. The console 103 is identical to a console 84 whose horizontal upper surface is provided with a few rubber knobs. The console 108 corresponds to the console 103, but is disposed in an inverted manner, i.e. having in the operative position the slotted hole on the outside and the borehole on the inside.

In the transport position, the frame beam 97 bears on the frame beam 92 via the consoles 107 and 103. A connecting rod 102 is pivotably connected with the console 84 about a horizontal shaft. Near its outer end the connecting rod 102 is included in the slotted hole 85 of the console 103 so as to be movable therein about a horizontal pivot shaft. According to a non-shown embodiment, the adjusting element 106 may be replaced by a connecting rod which, near its inner end, is connected via a horizontal pivot shaft with the adjusting element 102 and an arm which is pivotably connected about a horizontal shaft with the intermediate arms 94. The running wheels 39 of the working members 14 of the central group are furthermore disposed so as to be pivotable about a substantially vertical shaft.

The function of the hay-making machine corresponds to that of the first embodiment. In the operative position the machine functions as a tedder.

The working members 14, 29 and 30 of all three groups are arranged in such a manner that the crop is treated on a continuous strip of soil. This implies that, seen in the direction of travel A, the working member 29 located on the inside, pertaining to an outer group of working members 28, is overlapping the working members 14 located on the outside, pertaining to the central group. This overlap is larger than the overlap of the working members within each group. The working members are capable of adapting themselves to the unevennesses of the ground because the frame portions carrying working members are able to move relative to the frame 50 about the various horizontal pivot shafts.

When the machine has to be adjusted into the transport position, first the trestle 53 is pivoted rearwards about the horizontal shafts 56 by means of the hydraulic cylinder 60, i.e. in such a manner that the arms 55 have obtained a vertical position, or that the pivot shafts between the frame portions of the frame beams 80 and 15 have been arranged at least substantially horizontally. Then, by an upward pivotal movement of the outer frame beams 97 about the shafts 96 and subsequently of the intermediate arm 94 about the shaft 95, the outer working members 30 are positioned above the working members 29. Subsequently the frame beams 80 are pivoted forwardly beside the frame 50 about the vertical shafts 81 by means of the hydraulic cylinders 89. Afterwards the outer two working members of the central group 22 can be pivoted.

## Claims

1. An agricultural machine including a frame capable of being coupled to a tractor, which frame comprises hinge means, adjusting means and one or more frame beams (31, 32) which are pivotable about a relevant first pivot shaft (111), of which frame beams at least one is carrying at least one working member (29, 30), characterized in that a relevant frame beam (32) is pivotable about a second pivot shaft (111) extending substantially parallel to the first pivot shaft and at some distance therefrom, and that the adjusting means comprise an adjusting element (35) bridging the first and second pivot shafts, by means of which adjusting element (35), upon energizing, a pivotal movement about both pivot shafts (111) takes place.

2. An agricultural machine as claimed in claim 1, characterized in that the adjusting element is constituted by a linear drive, preferably a hydraulic cylinder (35).

3. An agricultural machine as claimed in claim 1 or 2, characterized in that the stroke of the adjusting element is such that pivoting about the first and second pivot shaft through totally approximately 180° is allowed.

4. An agricultural machine as claimed in claim 1, 2 or 3, characterized in that the stroke of the adjusting element is at least equal to at least approximately the shortest distance between these two pivot shafts.

5. An agricultural machine including a frame capable of being coupled to a tractor, which frame comprises hinge means and one or more frame beams (31, 32) which are pivotable about a relevant first pivot shaft (111), of which frame beams at least one is carrying at least one working member (29, 30), characterized in that a relevant frame beam (32) is pivotable about a second pivot shaft (111) extending substantially parallel to the first pivot shaft and at some distance therefrom, the part (33) connecting the two pivot shafts with each other being free from working members of the type intended for the relevant agricultural machine, in particular being entirely free from working members.

6. An agricultural machine as claimed in claim 5 in combination with any one of claims 1 to 4.

7. An agricultural machine including a frame capable of being coupled to a tractor, which frame comprises hinge means and two frame beams (31, 32) of which at least one is carrying at least one working member (29, 30), of which one is capable of being folded up on the second one by pivoting about a pivot shaft (111) located between these two frame beams, characterized in that between said two frame beams, at some distance from the aforementioned pivot shaft, there is provided a further pivot shaft (111) about which the first frame beam (32) is pivotable as well for the purpose of being folded up on the second frame beam (31).

8. An agricultural machine as claimed in claim 7 in combination with any one of the preceding claims 1 to 6.

9. An agricultural machine as claimed in any one of the preceding claims, characterized in that there are provided means, such as stop means (115, 116), for limiting the angle of pivoting about at least one of the pivot shafts (111) to at least approximately 90°.

10. An agricultural machine as claimed in claim 9, characterized in that, for each pivot shaft (111), there are provided means for limiting the angle of pivoting of each pivot shaft to at least approximately 90°.

11. An agricultural machine as claimed in any one of the preceding claims, characterized in that the adjusting element is fastened to the relevant frame beam by means of a stop means (114) including a first stop (115) and a second stop (116) preferably including mutually an angle of at least approximately 90° and extending mutually transversely in the pivot plane or at an angle therewith.

12. An agricultural machine as claimed in claim 11, characterized in that the first stop (115) extends substantially parallel to the longitudinal direction of the relevant frame beam (32) at some distance therefrom.

13. An agricultural machine as claimed in claim 12, characterized in that the second stop (116) extends between the first stop (115) and the relevant frame beam (32).

14. An agricultural machine as claimed in any one of the preceding claims, characterized in that at least in one of the utmost pivot positions the adjusting element (35) extends at least substantially parallel to the frame beam (32) which is pivotable about the two pivot shafts (111).

15. An agricultural machine as claimed in any one of the preceding claims, characterized in that through the relevant frame beam (32) and the first and second pivot shaft (111) there extends a drive element, such as a drive shaft (112), which is coupled with the working member (30) in a driven manner.

16. An agricultural machine as claimed in claim 15, characterized in that the drive element, which is produced as a drive shaft, comprises a universal joint (113) at the first and second pivot shaft.

17. An agricultural machine as claimed in any one of the preceding claims, characterized in that the first and second pivot shaft extend at least substantially horizontally, preferably at least substantially parallel to the usual direction of travel of the machine when the latter is in its operative position.

18. An agricultural machine as claimed in any one of the preceding claims, characterized in that there is provided a further pivot shaft (34) about which the frame beam (32), which is pivotable about the first and second pivot shafts, and the frame beam (31), which is located at the other side of the first and second pivot shaft (111), are together pivotable.

19. An agricultural machine as claimed in claim 18, characterized in that the further pivot shaft (34) is orientated either upwardly, preferably at least substantially vertically, or at least substantially parallel to the first and second pivot shaft, when the machine is in its operative position.

20. An agricultural machine as claimed in any one of the preceding claims, characterized in that the working members are constituted by tedder, raking or weeder members.

21. An agricultural machine as claimed in any one of the preceding claims, characterized in that the working members are rotatable about a relevant upwardly orientated shaft.

22. An agricultural machine as claimed in any one of the preceding claims, characterized in that said machine is constituted by a hay-making machine.

23. Method of folding up two frame beams of an agricultural machine, of which frame beams at least one is carrying at least one or more working members, one frame beam being pivoted about two pivot shafts, extending at least substantially parallel to each other and located at some distance from each other, for the purpose of being turned with one longitudinal side towards a longitudinal side of the other frame beam.

24. A method as claimed in claim 23, characterized in that one frame beam is pivoted about these two pivot shafts through an angle of totally at least approximately 180°.
